# FASCICULE DE BREVET EUROPEEN

(11) **EP 3 558 071 B1**
(45) Date de publication et mention de la délivrance du brevet: **14.07.2021**
(21) Numéro de dépôt: 17829251.2
(22) Date de dépôt: 18.12.2017
(51) Int. Cl.: A47J 27/04

(54) **ACCESSOIRE CUISEUR VAPEUR MODULAIRE POUR CHAUFFER ET/OU CUIRE À LA VAPEUR DES ALIMENTS CONTENUS DANS UN RÉCIPIENT**
MODULARES DAMPFGARERZUBEHÖR ZUM DAMPFERHITZEN UND/ODER -GAREN VON LEBENSMITTELN IN EINEM BEHÄLTER
MODULAR STEAMER ACCESSORY FOR STEAM-HEATING AND/OR -COOKING FOOD CONTAINED IN A CONTAINER

(30) Priorité: 20.12.2016 FR 1662879
(43) Date de publication de la demande: 30.10.2019
(73) Titulaire: SEB S.A., 69130 Ecully (FR)
(72) Inventeur: GUEGAN, Laurent, 74150 Lornay (FR); DELRUE, Olivier, 21260 Selongey (FR); BLOND, Laurent, 21200 Beaune (FR)
(74) Mandataire: SEB Développement
(86) Numéro de dépôt international: PCT/FR2017/053671
(87) Numéro de publication internationale: WO 2018/115698

(56) Documents cités:
- CA-A1- 2 945 650
- FR-A5- 2 161 447
- GB-A- 2 391 163

## Description

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 6 530 308 un accessoire cuiseur vapeur comprenant un générateur de vapeur comportant une chambre de production de vapeur comportant un dispositif de chauffe, la chambre de production de vapeur étant reliée à au moins une sortie de distribution de vapeur ménagée dans une partie inférieure du générateur de vapeur. Cette disposition permet d'injecter de la vapeur dans une enceinte de cuisson disposée en dessous du générateur de vapeur. La chambre de production de vapeur est alimentée en eau par l'intermédiaire d'un dispositif de contrôle de gouttes. Toutefois ce dispositif est plus adapté pour une injection ponctuelle de vapeur dans un gril que pour un chauffage ou une cuisson d'aliments au moyen de vapeur.

Un accessoire cuiseur vapeur selon le préambule de la revendication 1 est connu du document FR2161447.

Un objet de la présente invention est de proposer un accessoire cuiseur vapeur utilisé avec un récipient pour chauffer et/ou cuire des aliments à la vapeur, qui permette de contrôler l'échappement de la vapeur.

Un autre objet de la présente invention est de proposer un accessoire cuiseur vapeur utilisé avec un récipient pour chauffer et/ou cuire des aliments à la vapeur, qui soit adapté à différentes tailles de récipients.

Un autre objet de la présente invention est de proposer un accessoire cuiseur vapeur utilisé avec un récipient pour chauffer et/ou cuire des aliments à la vapeur, qui présente une construction économique.

Un autre objet de la présente invention est de proposer un cuiseur vapeur électrique pour chauffer et/ou cuire des aliments à la vapeur comportant un récipient et un accessoire cuiseur vapeur, qui permette de contrôler l'échappement de la vapeur.

Un autre objet de la présente invention est de proposer un cuiseur vapeur électrique pour chauffer et/ou cuire des aliments à la vapeur comportant un récipient et un accessoire cuiseur vapeur, qui soit adapté à différentes tailles de récipients.

Un autre objet de la présente invention est de proposer un cuiseur vapeur électrique pour chauffer et/ou cuire des aliments à la vapeur comportant un récipient et un accessoire cuiseur vapeur, qui présente une construction économique.

Ces objets sont atteints avec un accessoire cuiseur vapeur pour chauffer et/ou cuire à la vapeur des aliments contenus dans un récipient, l'accessoire cuiseur vapeur comprenant un générateur de vapeur comportant une chambre de production de vapeur reliée à au moins une sortie de distribution de vapeur ménagée dans une partie inférieure du générateur de vapeur, l'accessoire cuiseur vapeur comprenant une bague portant le générateur de vapeur, la bague présentant une face inférieure et une face supérieure, du fait que la bague ménage, si désiré avec le générateur de vapeur, au moins un échappement mettant en communication la face inférieure de la bague avec la face supérieure de la bague. En d'autres termes ledit échappement peut être ménagé soit dans la bague, soit entre la bague et le générateur de vapeur. Un même type de générateur de vapeur peut ainsi être utilisé avec différentes tailles de bagues. Cette disposition permet de faciliter l'adaptation de l'accessoire cuiseur vapeur à différentes tailles de récipients. Cette disposition permet aussi de mieux contrôler l'échappement de la vapeur hors de l'enceinte formée par l'accessoire cuiseur vapeur et le récipient utilisé avec l'accessoire cuiseur vapeur.

Avantageusement alors, la bague est amovible par rapport au générateur de vapeur. Cette disposition permet d'utiliser des bagues différentes avec un même générateur de vapeur.

Avantageusement encore, la bague comporte une paroi annulaire entourant le générateur de vapeur. La paroi annulaire définit alors la majeure partie de la face inférieure et de la face supérieure de la bague, voire la totalité de la face inférieure et/ou de la face supérieure de la bague.

Avantageusement alors, la paroi annulaire est réalisée en verre. Cette disposition permet d'observer la cuisson à la vapeur.

Selon une forme de réalisation, ledit échappement traverse la paroi annulaire. Cette disposition permet de définir la taille de l'échappement en fonction de la bague utilisée. Cette disposition permet également d'éloigner l'échappement du générateur de vapeur.

Selon une forme de réalisation, ledit échappement est formé par un conduit mettant en communication la face inférieure de la bague avec la face supérieure de la bague. Cette disposition permet de mieux contrôler l'échappement de la vapeur. Cette disposition permet également de définir la taille de l'échappement en fonction de la bague utilisée. Cette disposition permet également d'éloigner l'échappement du générateur de vapeur.

Selon une autre forme de réalisation, ledit échappement est ménagé entre la bague et le générateur de vapeur. Cette disposition permet de simplifier la réalisation de la bague. Toutefois la bague et le générateur de vapeur ne comportent pas nécessairement chacun une échancrure ménageant une partie de l'échappement.

Avantageusement encore, la bague comporte un joint annulaire portant le générateur de vapeur. Cette disposition permet d'obtenir une meilleure étanchéité entre la bague et le générateur de vapeur.

Selon une autre forme de réalisation, ledit échappement est ménagé dans le joint annulaire.

En alternative, l'échappement peut être délimité à la fois par la bague et par le générateur de vapeur, notamment à la fois par le joint annulaire et par le générateur de vapeur.

Avantageusement encore, l'accessoire cuiseur vapeur comprend un réservoir d'eau. Une telle réalisation est bien adaptée à un appareil domestique.

Avantageusement alors, le réservoir d'eau est porté par la bague.

Avantageusement encore, l'accessoire cuiseur vapeur comprend un réservoir d'eau alimentant en eau la chambre de production de vapeur. Cette disposition permet de chauffer une quantité d'eau plus réduite, ce qui favorise une obtention plus rapide de vapeur. En alternative, la chambre de production de vapeur pourrait comporter le réservoir d'eau. En d'autres termes, la chambre de production de vapeur comporte alors un dispositif de chauffe permettant de chauffer le réservoir d'eau comme par exemple dans une bouilloire.

Selon un mode de réalisation, le réservoir d'eau est amovible par rapport au générateur de vapeur et le générateur de vapeur porte le réservoir d'eau amovible. Cette disposition permet de faciliter le remplissage du réservoir d'eau.

Avantageusement encore, le générateur de vapeur présente une surface d'appui annulaire inférieure. Cette disposition permet de poser le générateur de vapeur sur le bord supérieur d'un récipient ou d'un adaptateur.

Avantageusement encore, le générateur de vapeur présente une paroi inférieure dans laquelle est formée ladite au moins une sortie de distribution de vapeur, et la chambre de production de vapeur est agencée dans le générateur de vapeur à distance de la paroi inférieure. Ces dispositions permettent de réaliser une chambre de distribution de vapeur sous la chambre de production de vapeur, ce qui permet plus de liberté dans l'agencement des sorties de distribution de vapeur.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Ces objets sont également atteints avec un cuiseur vapeur électrique comportant un récipient pour contenir les aliments à chauffer et/ou à cuire et un couvercle prévu pour reposer sur le récipient, dans lequel le couvercle forme un accessoire cuiseur vapeur pour chauffer et/ou cuire à la vapeur les aliments contenus dans le récipient, du fait que l'accessoire cuiseur vapeur est conforme à l'une au moins des caractéristiques précitées.

L'invention sera mieux comprise à l'étude de deux exemples de réalisation, pris à titre nullement limitatif, illustrés dans les figures 1 à 6 annexées, dans lesquelles :
- la figure 1 est une vue schématique en élévation d'un premier exemple de réalisation d'un accessoire cuiseur vapeur selon l'invention,
- la figure 2 est une vue schématique en élévation d'un deuxième exemple de réalisation d'un accessoire cuiseur vapeur selon l'invention,
- la figure 3 est une vue schématique en élévation de l'accessoire cuiseur vapeur illustré sur la figure 1 disposé sur un récipient de cuisson pour former un cuiseur vapeur électrique selon l'invention,
- la figure 4 est une vue schématique en élévation et en coupe d'un premier mode de réalisation d'une partie chauffante des accessoires cuiseur vapeur illustrés sur les figures 1, 2 et 3,
- la figure 5 est une vue en perspective et en coupe d'un deuxième mode de réalisation d'une partie chauffante d'accessoire cuiseur vapeur,
- la figure 6 est une vue en perspective et en coupe de la partie chauffante illustrée sur la figure 5, selon une autre orientation,
- la figure 7 est une vue en perspective et en coupe de la partie chauffante illustrée sur les figures 5 et 6, selon une autre section de coupe.

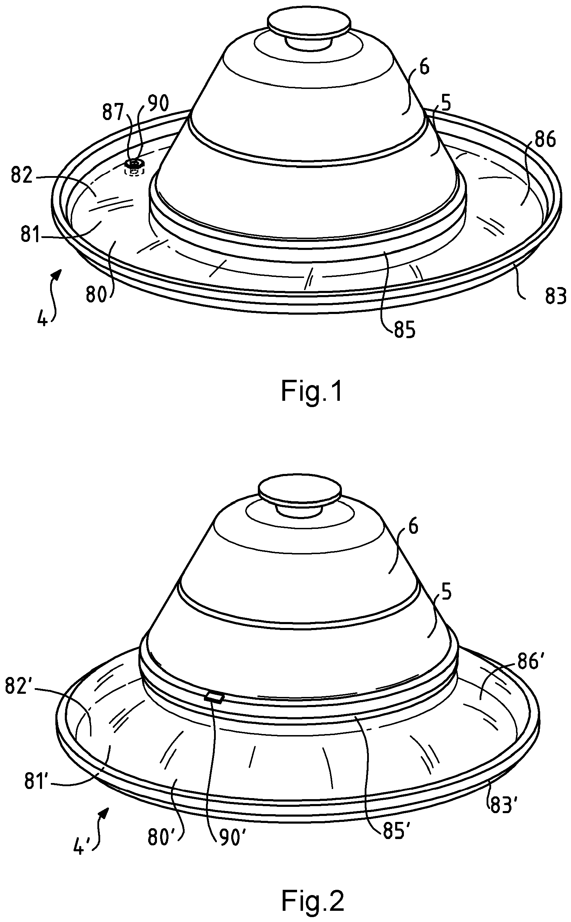

Les figures 1 et 2 illustrent deux exemples de réalisation d'un accessoire cuiseur vapeur 4, 4' pour chauffer et/ou cuire à la vapeur des aliments contenus dans un récipient. L'accessoire cuiseur vapeur 4 illustré sur la figure 1 et l'accessoire cuiseur vapeur 4' illustré sur la figure 2 comprennent un générateur de vapeur 5. L'accessoire cuiseur vapeur 4 illustré sur la figure 1 comprend une bague 80. L'accessoire cuiseur vapeur 4' illustré sur la figure 2 comprend une bague 80'.

La bague 80 ; 80' porte le générateur de vapeur 5. La bague 80 ; 80' présente une face inférieure 81 ; 81' et une face supérieure 82 ; 82'. La bague 80 ; 80' entoure le générateur de vapeur 5. La bague 80 ; 80' présente une bordure 83 ; 83' prévue pour reposer sur un récipient. La bague 80 ; 80' comporte une paroi annulaire 86 ; 86' entourant le générateur de vapeur 5. La bague 80 ; 80' présente un échappement 90 ; 90' mettant en communication la face inférieure 81 ; 81' avec la face supérieure 82 ; 82'.

Plus particulièrement dans les exemples de réalisation illustrés sur les figures 1 et 2, la bague 80 ; 80' est amovible par rapport au générateur de vapeur 5. La bague 80 ; 80' comporte un joint annulaire 85 ; 85' portant le générateur de vapeur 5.

Plus particulièrement dans les exemples de réalisation illustrés sur les figures 1 et 2, la paroi annulaire 86 ; 86' est réalisée en verre. Tel que représenté schématiquement sur la figure 1, la paroi annulaire 86 est plane. Tel que représenté schématiquement sur la figure 2, la paroi annulaire 86' est bombée vers le haut. La bordure 83 ; 83' peut être réalisée en métal, notamment en acier inoxydable. A titre de variante, la paroi annulaire 86 ; 86' peut notamment être réalisée en métal, notamment en acier inoxydable. La bordure 83 ; 83' peut alors si désiré être intégrée à la paroi annulaire 86 ; 86'.

Dans l'exemple de réalisation illustré sur la figure 1, l'échappement 90 traverse la paroi annulaire 86. Plus particulièrement, l'échappement 90 est formé par un conduit 87 mettant en communication la face inférieure 81 de la bague 80 avec la face supérieure 82 de la bague 80. Si désiré, le conduit 87 peut s'étendre en dessous de la face inférieure de la paroi annulaire 86 et/ou au-dessus de la face supérieure de la paroi annulaire 86. Le conduit 87 peut notamment être formé par deux pièces métalliques assemblées, par exemple vissées entre elles. Cette disposition permet de conserver l'épaisseur de la paroi annulaire 86 autour de la perforation ménagée dans la paroi annulaire 86 pour loger le conduit 87. Le conduit 87 peut ainsi reposer sur la face supérieure de la paroi annulaire 86 et contre la face inférieure de la paroi annulaire 86. A titre de variante, le conduit pourrait notamment être issu de la paroi annulaire 86.

Dans l'exemple de réalisation illustré sur la figure 2, l'échappement 90' est ménagé entre la bague 80' et le générateur de vapeur 5. Plus particulièrement, l'échappement 90' est ménagé dans le joint annulaire 85'.

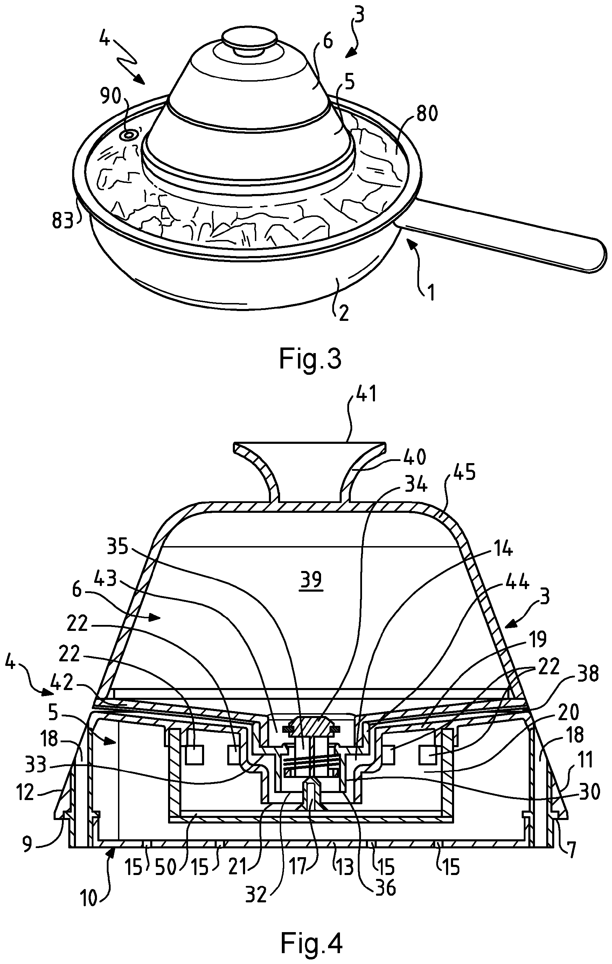

Le cuiseur vapeur électrique 1 illustré de manière schématique sur la figure 3 est un appareil pour chauffer et/ou cuire à la vapeur des aliments, comportant un récipient 2 pour contenir les aliments à chauffer et/ou à cuire, et un couvercle 3 prévu pour reposer sur le récipient 2. Le couvercle 3 forme un accessoire cuiseur vapeur 4 pour chauffer et/ou cuire à la vapeur des aliments contenus dans le récipient 2. L'accessoire cuiseur vapeur 4 repose sur le récipient 2. Plus particulièrement, la bague 80 repose sur le récipient 2. L'échappement 90 débouche au-dessus du récipient 2.

Selon le diamètre du récipient 2 utilisé, la bordure 83 de la bague 80 peut reposer ou non sur le bord supérieur du récipient 2.

Dans le mode de réalisation illustré sur la figure 4, l'accessoire cuiseur vapeur 4 comprend le générateur de vapeur 5 et un réservoir d'eau 6. Le réservoir d'eau 6 est amovible par rapport au générateur de vapeur 5 et le générateur de vapeur 5 porte le réservoir d'eau 6 amovible. Le générateur de vapeur 5 comporte une entrée d'admission d'eau 14 alimentée en eau par le réservoir d'eau 6 disposé sur le générateur de vapeur 5. Le générateur de vapeur 5 comporte une chambre de production de vapeur 20. Le réservoir d'eau 6 alimente en eau la chambre de production de vapeur 20. A cet effet la chambre de production de vapeur 20 présente une entrée d'alimentation en eau 21 alimentée en eau par le réservoir d'eau 6 disposé sur le générateur de vapeur 5. La chambre de production de vapeur 20 comporte un dispositif de chauffe 50 pour transformer en vapeur l'eau présente dans la chambre de production de vapeur 20. La chambre de production de vapeur 20 présente au moins une sortie d'évacuation de vapeur 22. La chambre de production de vapeur 20 est reliée à au moins une sortie de distribution de vapeur 15 ménagée dans une partie inférieure 10 du générateur de vapeur 5.

Plus particulièrement, le générateur de vapeur 5 présente une surface d'appui annulaire inférieure 9 prévue pour reposer sur la bague 80 ; 80'. L'entrée d'admission d'eau 14 du générateur de vapeur 5 est agencée dans une face supérieure 19 du générateur de vapeur 5. L'entrée d'admission d'eau 14 forme un entonnoir. L'entrée d'admission d'eau 14 débouche dans l'entrée d'alimentation en eau 21 de la chambre de production de vapeur 20. Le générateur de vapeur 5 présente une paroi inférieure 13 dans laquelle est formée ladite au moins une sortie de distribution de vapeur 15. Le générateur de vapeur 5 présente une paroi latérale extérieure 12 s'étendant en dessous du réservoir d'eau 6 disposé sur le générateur de vapeur 5.

Dans le mode de réalisation illustré sur la figure 4, le dispositif de chauffe 50 est agencé dans le fond de la chambre de production de vapeur 20. Le dispositif de chauffe 50 peut notamment comporter un élément chauffant sérigraphié, ou un élément chauffant blindé disposé sous une plaque de diffusion de chaleur et/ou dans une plaque de diffusion de chaleur. A titre de variante, le dispositif de chauffe 50 pourrait notamment être agencé à l'intérieur de la chambre de production de vapeur 20.

Selon une forme de réalisation préférée, la chambre de production de vapeur 20 présente au moins une sortie d'évacuation de vapeur 22 disposée plus haut que l'entrée d'alimentation en eau 21, ladite au moins une sortie d'évacuation de vapeur 22 communiquant avec ladite au moins une sortie de distribution de vapeur 15.

Dans le mode de réalisation illustré sur la figure 4, la chambre de production de vapeur 20 présente plusieurs sorties d'évacuation de vapeur 22 disposées plus haut que l'entrée d'alimentation en eau 21 et communiquant avec les sorties de distribution de vapeur 15. La chambre de production de vapeur 20 est agencée dans le générateur de vapeur 5 à distance de la paroi inférieure 13, ce qui permet une plus grande liberté dans la position des sorties de distribution de vapeur 15. La chambre de production de vapeur 20 est agencée dans le générateur de vapeur 5 à distance de la paroi latérale extérieure 12. La partie inférieure 10 forme la paroi inférieure 13.

Le réservoir d'eau 6 comporte une sortie d'écoulement 32 alimentant en eau le générateur de vapeur 5.

Dans le mode de réalisation illustré sur la figure 4, l'accessoire cuiseur vapeur 4 comporte au moins un passage d'air 38 mettant en communication la sortie d'écoulement 32 avec l'extérieur lorsque le réservoir d'eau 6 est disposé sur le générateur de vapeur 5. Tel que bien visible sur la figure 4, ledit au moins un passage d'air 38 est ménagé entre le réservoir d'eau 6 et le générateur de vapeur 5, plus particulièrement entre une face inférieure 33 du réservoir d'eau 6 et la face supérieure 19 du générateur de vapeur 5. Le réservoir d'eau 6 et/ou le générateur de vapeur 5 peuvent présenter à cet effet des entretoises (non représentées sur la figure 4) pour écarter la face inférieure 33 du réservoir d'eau 6 de la face supérieure 19 du générateur de vapeur 5. A titre de variante, ledit au moins un passage d'air 38 peut notamment être ménagé dans le réservoir d'eau 6 et/ou dans le générateur de vapeur 5.

Dans le mode de réalisation illustré sur la figure 4, la sortie d'écoulement 32 est agencée dans une face inférieure 33 du réservoir d'eau 6. La partie inférieure du réservoir d'eau 6 repose sur la partie supérieure du générateur de vapeur 5.

Plus particulièrement, la sortie d'écoulement 32 s'étend au-dessus de l'entrée d'alimentation en eau 21 de la chambre de production de vapeur 20. La sortie d'écoulement 32 présente un clapet 34 mobile entre une position d'obturation dans laquelle la sortie d'écoulement 32 est obturée et une position d'écoulement dans laquelle la sortie d'écoulement 32 autorise l'écoulement de l'eau hors du réservoir d'eau 6. De préférence, le réservoir d'eau 6 comporte au moins une surface d'appui 36 s'étendant en dessous du clapet 34 disposé en position d'obturation, pour prévenir les actionnements intempestifs du clapet 34. Selon une forme de réalisation préférée, le clapet 34 est entouré par un conduit 30 s'étendant en dessous du clapet 34 disposé en position d'obturation.

Dans le mode de réalisation illustré sur la figure 4, le générateur de vapeur 5 présente un ergot 17 repoussant le clapet 34 vers la position d'écoulement lorsque le réservoir d'eau 6 est disposé sur le générateur de vapeur 5. Tel que visible sur la figure 4, l'ergot 17 est agencé dans la chambre de production de vapeur 20. Le clapet 34 est mobile selon une direction principalement verticale. Le clapet 34 est repoussé vers la position d'obturation par un élément de rappel élastique 35. L'élément de rappel élastique 35 est avantageusement formé par un ressort hélicoïdal. La surface d'appui 36 est formée par la sortie d'écoulement 32. A titre de variante, le clapet 34 peut présenter un ergot repoussé par la chambre de production de vapeur 20 lorsque le réservoir d'eau 6 est disposé sur le générateur de vapeur 5.

Selon une forme de réalisation préférée, le réservoir d'eau 6 peut être positionné sur le générateur de vapeur 5 selon plusieurs orientations angulaires. Dans le mode de réalisation illustré sur la figure 4, le réservoir d'eau 6 peut être positionné sur le générateur de vapeur 5 sans indexation particulière. Plus particulièrement, l'entrée d'admission d'eau 14 est agencée dans la partie centrale de la face supérieure 19 du générateur de vapeur 5.

Selon une forme de réalisation préférée, le réservoir d'eau 6 comporte un organe de préhension 40. Dans le mode de réalisation illustré sur la figure 4, l'organe de préhension 40 est agencé à l'opposé de la sortie d'écoulement 32. L'organe de préhension 40 présente une surface d'appui 41 prévue pour porter le réservoir d'eau 6 lorsque le réservoir d'eau 6 est disposé en position retournée.

Le réservoir d'eau 6 peut être réalisé en deux parties assemblées, si désiré démontables, notamment pour le remplissage et/ou pour le nettoyage. Dans le mode de réalisation illustré sur la figure 4, la face inférieure 33 du réservoir d'eau 6 est formée par une base 42 comportant un orifice 43 autour duquel est monté un bouchon 44 présentant la sortie d'écoulement 32. Le bouchon 44 loge le clapet 34. Un corps 45 est monté sur la base 42. L'organe de préhension 40 est issu du corps 45. Le corps 45 peut être assemblé de manière démontable ou non avec la base 42. A titre de variante, l'organe de préhension 40 peut notamment être issu de la base 42, ou être rapporté ou fixé sur le corps 45 ou sur la base 42. Le réservoir d'eau 6 peut comporter un orifice de remplissage distinct de la sortie d'écoulement 32. Si désiré, l'orifice de remplissage peut être obturé.

L'accessoire cuiseur vapeur 4 illustré sur la figure 1 et le cuiseur vapeur électrique 1 illustré sur la figure 3 comportant le générateur de vapeur 5 illustré sur la figure 4 fonctionnent et s'utilisent de la manière suivante.

L'utilisateur remplit d'abord le réservoir d'eau 6, par exemple en retirant la base 42 du corps 45 après avoir retourné le réservoir d'eau 6. L'utilisateur replace ensuite la base 42 sur le corps 45 et retourne à nouveau le réservoir d'eau 6 pour positionner le réservoir d'eau 6 sur le générateur de vapeur 5. La sortie d'écoulement 32 du réservoir d'eau 6 s'étend alors dans l'entrée d'admission d'eau 14 du générateur de vapeur 5. Le clapet 34 est repoussé vers la position d'écoulement par le générateur de vapeur 5 lorsque le réservoir d'eau 6 est disposé sur le générateur de vapeur 5. L'ergot 17 s'étend alors à l'intérieur du conduit 30 et repousse le clapet 34 vers la position d'écoulement, de sorte que l'eau issue de la sortie d'écoulement 32 du réservoir d'eau 6 s'écoule dans l'entrée d'admission d'eau 14 du générateur de vapeur 5 pour atteindre la sortie d'écoulement 32 du réservoir d'eau 6. Le niveau d'eau monte dans la chambre de production de vapeur 20 jusqu'à atteindre la sortie d'écoulement 32. Le réservoir d'eau 6 disposé sur le générateur de vapeur 5 forme une chambre fermée 39 au-dessus de la sortie d'écoulement 32. L'eau ne peut s'écouler hors du réservoir d'eau 6 que si de l'air prend sa place. A cet effet la sortie d'écoulement 32 communiquant avec l'extérieur de l'accessoire cuiseur vapeur 4 par le passage d'air 38 permet que de l'air rentre dans le réservoir d'eau 6, tant que le niveau de l'eau n'atteint pas la sortie d'écoulement 32.

L'utilisateur met alors en marche le dispositif de chauffe 50. La température de l'eau présente dans la chambre de production de vapeur s'élève jusqu'à ce que de la vapeur soit produite. La vapeur s'échappe alors par les sorties d'évacuation de vapeur 22 pour atteindre les sorties de distribution de vapeur 15 et se répandre dans le récipient 2 pour cuire ou chauffer les aliments présents dans le récipient 2. L'air présent au-dessus des aliments peut s'échapper par l'échappement 90. La production de vapeur entraîne une diminution du niveau de l'eau présente dans la chambre de production de vapeur 20 en dessous de la sortie d'écoulement 32, ce qui permet une réalimentation de la chambre de production de vapeur 20 en eau. L'eau peut alors s'écouler du réservoir d'eau 6 par la sortie d'écoulement 32, jusqu'à ce que le niveau de l'eau atteigne la sortie d'écoulement 32, de l'air provenant de l'extérieur de l'accessoire cuiseur vapeur 4 passant par le passage d'air 38 pour entrer par la sortie d'écoulement 32 dans le réservoir d'eau 6.

Lorsque les aliments présents dans le récipient 2 sont saturés en vapeur, la vapeur s'échappe par l'échappement 90 ménagé dans la bague 80.

Le réservoir d'eau 6 alimente en eau la chambre de production de vapeur 20 par gravité. En d'autres termes, l'eau s'écoule du réservoir d'eau 6 pour alimenter la chambre de production de vapeur 20.

A titre de variante, le réservoir d'eau 6 ne comporte pas nécessairement un clapet 34. La sortie d'écoulement 32 du réservoir d'eau 6 peut notamment être calibrée pour que le débit d'eau entrant dans la chambre de production de vapeur 20 permette la vaporisation de l'eau présente dans la chambre de production de vapeur 20 sans que de l'eau ne déborde de la chambre de production de vapeur 20.

A titre de variante, l'entrée d'admission d'eau 14 et l'entrée d'alimentation en eau 21 peuvent être confondues.

A titre de variante, le réservoir d'eau 6 peut être verrouillé par baïonnette sur le générateur de vapeur 5. A cet effet le réservoir d'eau 6 peut par exemple comporter des pattes prévues pour un accrochage par rotation avec le générateur de vapeur, ou vice-versa.

A titre de variante, l'accessoire cuiseur vapeur 4 peut comporter une pompe pour contrôler l'écoulement de l'eau hors du réservoir d'eau 6 afin d'alimenter la chambre de production de vapeur 20. Pour simplifier les connexions électriques, la pompe peut être avantageusement disposée dans le générateur de vapeur 5.

La figure 4 correspond à la réalisation de la partie chauffante des accessoires cuiseur vapeur illustrés sur les figures 1, 2 et 3. Dans le mode de réalisation illustré sur la figure 4, l'accessoire cuiseur vapeur 4 comprend le générateur de vapeur 5 et le réservoir d'eau 6. Le générateur de vapeur 5 porte le réservoir d'eau 6. Tel que représenté sur les figures 1 et 2, la bague 80 ; 80' porte le générateur de vapeur 5. Ainsi le réservoir d'eau 6 est porté par la bague 80 ; 80', tel que bien visible sur les figures 1 et 2.

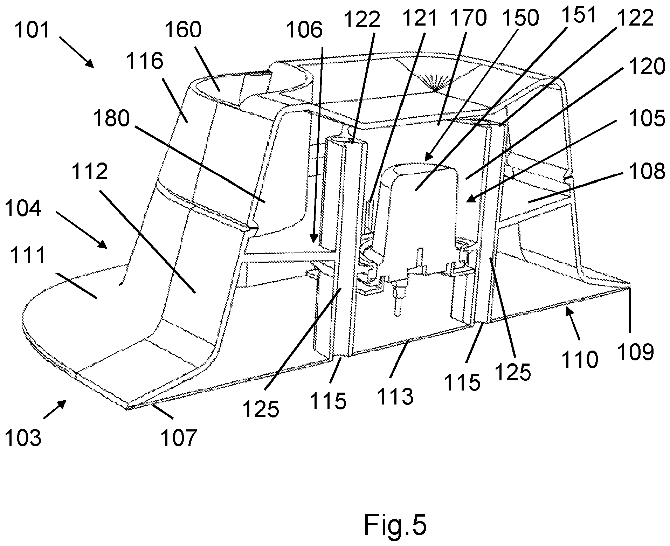

Les figures 5 à 7 illustrent un autre mode de réalisation d'un générateur de vapeur 105 appartenant à un accessoire cuiseur vapeur 104 comprenant également au moins une bague (non représentée aux figures), prévue pour porter le générateur de vapeur 105.

L'accessoire cuiseur vapeur 104 est prévu pour chauffer et/ou cuire à la vapeur des aliments contenus dans un récipient (également non représenté aux figures). L'accessoire cuiseur vapeur 104 comprend le générateur de vapeur 105 et un réservoir d'eau 106.

Le réservoir d'eau 106 communique avec l'extérieur par un orifice de remplissage 160. Si désiré, le réservoir d'eau 106 peut présenter au moins un autre orifice de remplissage.

Le générateur de vapeur 105 comporte une chambre de production de vapeur 120. Le réservoir d'eau 106 alimente en eau la chambre de production de vapeur 120 par gravité. A cet effet le réservoir d'eau 106 communique par une entrée d'alimentation en eau 121 avec la chambre de production de vapeur 120. Si désiré le réservoir d'eau 106 peut communiquer avec la chambre de production de vapeur 120 par au moins une autre entrée d'alimentation en eau.

De préférence, le réservoir d'eau 106 présente un fond 108 déversant vers l'entrée d'alimentation en eau 121.

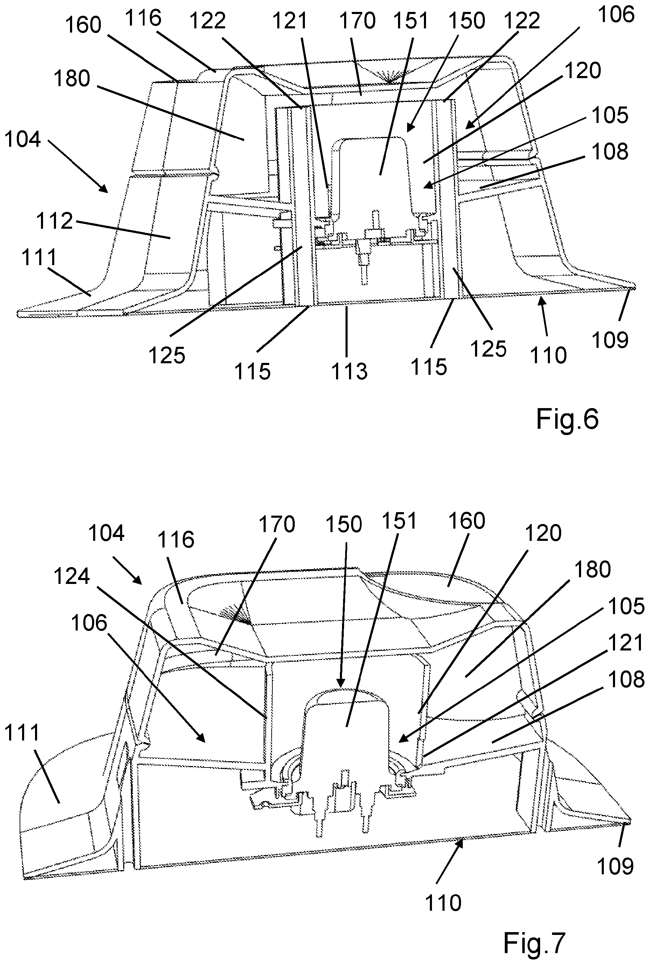

Dans le mode de réalisation illustré sur les figures 5 à 7, le réservoir d'eau 106 entoure la chambre de production de vapeur 120. A cet effet une paroi annulaire 124, mieux visible sur la figure 7, entoure la chambre de production de vapeur 120. L'entrée d'alimentation en eau 121 est formée dans la paroi annulaire 124.

La chambre de production de vapeur 120 comporte un dispositif de chauffe 150 pour transformer en vapeur l'eau présente dans la chambre de production de vapeur 120. Dans le mode de réalisation illustré sur les figures 5 à 7, le dispositif de chauffe 150 comprend un plot chauffant 151. A titre de variante, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120. Si désiré, la chambre de production de vapeur 120 peut comporter plusieurs dispositifs de chauffe.

La chambre de production de vapeur 120 est reliée à au moins une sortie de distribution de vapeur 115 ménagée dans une partie inférieure 110 du générateur de vapeur 105. A cet effet, la chambre de production de vapeur 120 communique avec au moins une sortie d'évacuation de vapeur 122 disposée plus haut que l'entrée d'alimentation en eau 121. La chambre de production de vapeur 120 est confinée au-dessus de la ou des sortie(s) d'évacuation de vapeur 122. La ou chaque sortie d'évacuation de vapeur 122 communique par un conduit 125 avec la ou l'une des sortie(s) de distribution de vapeur 115.

Plus particulièrement dans le mode de réalisation illustré sur les figures 5 à 7, la chambre de production de vapeur 120 communique avec la ou les sortie(s) d'évacuation de vapeur 122 par une chambre d'expansion de vapeur 170 disposée au-dessus de la chambre de production de vapeur 120. En d'autres termes, ladite chambre d'expansion de vapeur est dépourvue de communication avec l'extérieur au-dessus de ladite au moins une sortie d'évacuation de vapeur 122. Une paroi latérale séparatrice 180 est agencée entre l'orifice de remplissage 160 et la chambre d'expansion de vapeur 170 pour éviter les échappements de vapeur par l'orifice de remplissage 160. A cet effet, la paroi latérale séparatrice 180 s'étend plus bas que la ou les sorties(s) d'évacuation de vapeur 122. En d'autres termes, la paroi latérale séparatrice 180 s'étend en dessous de la ou des sortie(s) d'évacuation de vapeur 122. Plus particulièrement, la paroi latérale séparatrice 180 s'étend plus bas que l'entrée d'alimentation en eau 121. Tel que bien visible sur les figures 5 à 7, la paroi latérale séparatrice 180 s'étend dans le réservoir d'eau 106. En d'autres termes, l'eau peut atteindre les deux faces de la partie inférieure de la paroi latérale séparatrice 180.

Dans le mode de réalisation illustré sur les figures 5 à 7, la chambre de production de vapeur 120 présente plusieurs sorties d'évacuation de vapeur 122 disposées plus haut que l'entrée d'alimentation en eau 121 et communiquant par plusieurs conduits 125 avec les sorties de distribution de vapeur 115. Plus particulièrement, les conduits 125 sont ménagés dans la paroi annulaire 124. Deux groupes de trois conduits 125 sont disposés de part et d'autre du plot chauffant 151. Les conduits 125 sont verticaux. A titre de variante les conduits 125 peuvent être descendants sans nécessairement être verticaux. De préférence les conduits 125 sont dépourvus de chicanes. En d'autres termes, les conduits 125 sont descendants de manière continue, sans nécessairement être rectilignes.

Plus particulièrement, le générateur de vapeur 105 présente une surface d'appui annulaire inférieure 109 prévue pour reposer sur la bague. Ainsi, lorsque la surface d'appui annulaire inférieure 109 repose sur la bague, la bague porte le générateur de vapeur 105. Ainsi, lorsque la surface d'appui annulaire inférieure 109 repose sur la bague, le réservoir d'eau 106 est porté par la bague.

Le générateur de vapeur 105 présente une paroi inférieure 113 dans laquelle est/sont formée(s) la ou les sorties de distribution de vapeur 115. La chambre de production de vapeur 120 est agencée dans le générateur de vapeur 105 à distance de la paroi inférieure 113, ce qui permet une plus grande liberté dans la position des sorties de distribution de vapeur 115.

Le générateur de vapeur 105 présente une paroi latérale extérieure 112. Le fond 108 du réservoir d'eau 106 relie la paroi latérale extérieure 112 à la paroi annulaire 124. La chambre de production de vapeur 120 est agencée dans le générateur de vapeur 105 à distance de la paroi latérale extérieure 112.

L'accessoire cuiseur vapeur 104 présente une paroi supérieure 116 avantageusement réalisée en matière transparente ou translucide. La paroi supérieure 116 est assemblée avec la paroi latérale extérieure 112, par exemple par clipsage, par collage, par surmoulage, par vissage ou par soudage. La paroi supérieure 116 forme une partie du réservoir d'eau 106. La paroi latérale séparatrice 180 est issue de la paroi supérieure 116. La paroi supérieure 116 forme la partie supérieure de la chambre d'expansion de vapeur 170.

L'accessoire cuiseur vapeur 104 illustré sur les figures 5 à 7 fonctionne et s'utilise de la manière suivante.

L'utilisateur dispose l'accessoire cuiseur vapeur 104 sur un récipient après avoir disposé les aliments dans un récipient. L'utilisateur remplit le réservoir d'eau 106 par l'orifice de remplissage 160. L'eau s'écoule par l'entrée d'alimentation en eau 121 dans la chambre de production de vapeur 120. De préférence, l'utilisateur remplit le réservoir d'eau 106 jusqu'à un niveau suffisamment inférieur aux sorties d'évacuation de vapeur 122, pour éviter que l'eau atteigne les sorties d'évacuation de vapeur 122 et s'écoule par les conduits 125. L'utilisateur met alors en marche le dispositif de chauffe 150. La température de l'eau présente dans la chambre de production de vapeur 120 s'élève jusqu'à ce que de la vapeur soit produite. La vapeur s'élève depuis la chambre de production de vapeur 120 pour atteindre la chambre d'expansion de vapeur 170. La vapeur est alors confinée par la paroi supérieure 116, par la paroi latérale séparatrice 180 et par l'eau présente dans le réservoir d'eau 106. La vapeur s'échappe alors par les sorties d'évacuation de vapeur 122 pour atteindre les sorties de distribution de vapeur 115 en descendant par les conduits 125. La vapeur sortant des sorties de distribution de vapeur 115 se répand dans le récipient. L'air présent au-dessus des aliments peut s'échapper par l'échappement.

Lorsque les aliments présents dans le récipient sont saturés en vapeur, la vapeur s'échappe par l'échappement ménagé dans la bague.

A titre de variante la bague 80 ; 80' peut ménager, si désiré avec le générateur de vapeur 5 ; 105, au moins un échappement 90 ; 90' mettant en communication la face inférieure 81 ; 81' de la bague 80 ; 80' avec la face supérieure 82 ; 82' de la bague 80 ; 80'.

A titre de variante, le générateur de vapeur 5 ; 105 peut présenter au moins un évent mettant en communication la partie inférieure 10 ; 110 du générateur de vapeur 5 ; 105 avec une partie extérieure 11 ; 111 du générateur de vapeur 5 ; 105.

La présente invention n'est nullement limitée aux exemples de réalisation décrits et à leurs variantes, mais englobe de nombreuses modifications dans le cadre des revendications.

## Revendications

1. Accessoire cuiseur vapeur (4 ; 4' ; 104) pour chauffer et/ou cuire à la vapeur des aliments contenus dans un récipient (2), l'accessoire cuiseur vapeur (4 ; 4' ; 104) comprenant un générateur de vapeur (5 ; 105) comportant une chambre de production de vapeur (20 ; 120) reliée à au moins une sortie de distribution de vapeur (15 ; 115) ménagée dans une partie inférieure (10 ; 110) du générateur de vapeur (5 ; 105), l'accessoire cuiseur vapeur (4 ; 4' ; 104) comprenant une bague (80 ; 80') portant le générateur de vapeur (5 ; 105), la bague (80 ; 80') présentant une face inférieure (81, 81') et une face supérieure (82 ; 82'), l'accessoire cuiseur vapeur (4 ; 4' ; 104) comprenant un réservoir d'eau (6 ; 106), le réservoir d'eau (6 ; 106) étant porté par la bague (80 ; 80'), **caractérisé en ce que** la bague (80 ; 80') ménage, si désiré avec le générateur de vapeur (5 ; 105), au moins un échappement (90 ; 90') mettant en communication la face inférieure (81 ; 81') de la bague (80 ; 80') avec la face supérieure (82 ; 82') de la bague (80 ; 80').

2. Accessoire cuiseur vapeur (4 ; 4'; 104) selon la revendication 1, **caractérisé en ce que** la bague (80 ; 80') est amovible par rapport au générateur de vapeur (5 ; 105).

3. Accessoire cuiseur vapeur (4 ; 4' ; 104) selon l'une des revendications 1 ou 2, **caractérisé en ce que** la bague (80 ; 80') comporte une paroi annulaire (86 ; 86') entourant le générateur de vapeur (5 ; 105).

4. Accessoire cuiseur vapeur (4) selon la revendication 3, **caractérisé en ce que** la paroi annulaire (86 ; 86') est réalisée en verre.

5. Accessoire cuiseur vapeur (4 ; 4' ; 104) selon l'une des revendications 3 ou 4, **caractérisé en ce que** ledit échappement (90) traverse la paroi annulaire (86).

6. Accessoire cuiseur vapeur (4) selon l'une des revendications 1 à 5, **caractérisé en ce que** ledit échappement (90) est formé par un conduit (87) mettant en communication la face inférieure (81) de la bague (80) avec la face supérieure (82) de la bague (80).

7. Accessoire cuiseur vapeur (4') selon l'une des revendications 1 à 4, **caractérisé en ce que** ledit échappement (90') est ménagé entre la bague (80') et le générateur de vapeur (5).

8. Accessoire cuiseur vapeur (4 ; 4' ; 104) selon l'une des revendications 1 à 7, **caractérisé en ce que** la bague (80 ; 80') comporte un joint annulaire (85 ; 85') portant le générateur de vapeur (5 ; 105).

9. Accessoire cuiseur vapeur (4') selon la revendication 8, **caractérisé en ce que** ledit échappement (90') est ménagé dans le joint annulaire (85').

10. Accessoire cuiseur vapeur (4 ; 4' ; 104) selon l'une des revendications 1 à 9, **caractérisé en ce que** le réservoir d'eau (6 ; 106) alimente en eau la chambre de production de vapeur (20 ; 120).

11. Accessoire cuiseur vapeur (4 ; 4') selon l'une des revendications 1 à 10, **caractérisé en ce que** le réservoir d'eau (6) est amovible par rapport au générateur de vapeur (5), et **en ce que** le générateur de vapeur (5) porte le réservoir d'eau (6) amovible.

12. Accessoire cuiseur vapeur (4 ; 4' ; 104) selon l'une des revendications 1 à 9, **caractérisé en ce que** la chambre de production de vapeur (20 ; 120) comporte le réservoir d'eau (6 ; 106).

13. Accessoire cuiseur vapeur (4 ; 4' ; 104) selon l'une des revendications 1 à 12, **caractérisé en ce que** le générateur de vapeur (5 ; 105) présente une surface d'appui annulaire inférieure (9 ; 109).

14. Accessoire cuiseur vapeur (4 ; 4' ; 104) selon l'une des revendications 1 à 13, **caractérisé en ce que** le générateur de vapeur (5 ; 105) présente une paroi inférieure (13 ; 113) dans laquelle est formée ladite au moins une sortie de distribution de vapeur (15 ; 115) et **en ce que** la chambre de production de vapeur (20 ; 120) est agencée dans le générateur de vapeur (5 ; 105) à distance de la paroi inférieure (13 ; 113).

15. Accessoire cuiseur vapeur (4 ; 4' ; 104) selon l'une des revendications 1 à 14, **caractérisé en ce que** le générateur de vapeur (5 ; 105) présente une paroi latérale extérieure (12 ; 112) et **en ce que** la chambre de production de vapeur (20 ; 120) est agencée dans le générateur de vapeur (5 ; 105) à distance de la paroi latérale extérieure (12 ; 112).

16. Cuiseur vapeur électrique (1) comportant un récipient (2) pour contenir les aliments à chauffer et/ou à cuire et un couvercle (3) prévu pour reposer sur le récipient (2), dans lequel le couvercle (3) forme un accessoire cuiseur vapeur (4) pour chauffer et/ou cuire à la vapeur les aliments contenus dans le récipient (2), **caractérisé en ce que** l'accessoire cuiseur vapeur (4) est conforme à l'une des revendications 1 à 15.

## Patentansprüche

1. Dampfgarerzubehör (4; 4'; 104) zum Dampferhitzen und/ oder -garen von in einem Behälter (2) enthaltenen Lebensmitteln, wobei das Dampfgarerzubehör (4; 4'; 104) einen Dampfgenerator (5; 105) umfasst, der eine Dampferzeugungskammer (20 ; 120) umfasst, die mit mindestens einem Dampfverteilungsausgang (15; 115) verbunden ist, der in einem unteren Teil (10; 110) des Dampfgenerators (5; 105) eingerichtet ist, wobei das Dampfgarerzubehör (4; 4'; 104) einen Ring (80; 80') umfasst, der den Dampfgenerator (5; 105) trägt, wobei der Ring (80; 80') eine Unterseite (81, 81') und eine Oberseite (82; 82') aufweist, wobei das Dampfgarerzubehör (4; 4'; 104) einen Wassertank (6; 106) umfasst, wobei der Wassertank (6; 106) durch den Ring (80; 80') getragen wird, **dadurch gekennzeichnet, dass** der Ring (80; 80'), wenn gewünscht, mit dem Dampfgenerator (5; 105) mindestens eine Ableitung (90; 90') einrichtet, die die Unterseite (81; 81') des Ringes (80; 80') mit der Oberseite (82; 82') des Ringes (80; 80') in Kommunikation versetzt.

2. Dampfgarerzubehör (4; 4'; 104) nach Anspruch 1, **dadurch gekennzeichnet, dass** der Ring (80; 80') in Bezug auf den Dampfgenerator (5; 105) abnehmbar ist.

3. Dampfgarerzubehör (4; 4'; 104) nach einem der Ansprüche 1 oder 2, **dadurch gekennzeichnet, dass** der Ring (80; 80') eine ringförmige Wand (86; 86') umfasst, die den Dampfgenerator (5; 105) umgibt.

4. Dampfgarerzubehör (4) nach Anspruch 3, **dadurch gekennzeichnet, dass** die ringförmige Wand (86; 86') aus Glas gefertigt ist.

5. Dampfgarerzubehör (4; 4'; 104) nach einem der Ansprüche 3 oder 4, **dadurch gekennzeichnet, dass** die Ableitung (90) die ringförmige Wand (86) durchquert.

6. Dampfgarerzubehör (4) nach einem der Ansprüche 1 bis 5, **dadurch gekennzeichnet, dass** die Ableitung (90) durch eine Leitung (87) gebildet wird, die die Unterseite (81) des Ringes (80) mit der Oberseite (82) des Ringes (80) in Kommunikation versetzt.

7. Dampfgarerzubehör (4') nach einem der Ansprüche 1 bis 4, **dadurch gekennzeichnet, dass** die Ableitung (90') zwischen dem Ring (80') und dem Dampfgenerator (5) eingerichtet ist.

8. Dampfgarerzubehör (4; 4'; 104) nach einem der Ansprüche 1 bis 7, **dadurch gekennzeichnet, dass** der Ring (80; 80') eine ringförmige Dichtung (85; 85') umfasst, die den Dampfgenerator (5; 105) trägt.

9. Dampfgarerzubehör (4') nach Anspruch 8, **dadurch gekennzeichnet, dass** die Ableitung (90') in der ringförmigen Dichtung (85') eingerichtet ist.

10. Dampfgarerzubehör (4; 4'; 104) nach einem der Ansprüche 1 bis 9, **dadurch gekennzeichnet, dass** der Wassertank (6; 106) die Dampferzeugungskammer (20 ; 120) mit Wasser versorgt.

11. Dampfgarerzubehör (4; 4') nach einem der Ansprüche 1 bis 10, **dadurch gekennzeichnet, dass** der Wassertank (6) in Bezug auf den Dampfgenerator (5) abnehmbar ist, und dadurch, dass der Dampfgenerator (5) den abnehmbaren Wassertank (6) trägt.

12. Dampfgarerzubehör (4; 4'; 104) nach einem der Ansprüche 1 bis 9, **dadurch gekennzeichnet, dass** die Dampferzeugungskammer (20; 120) den Wassertank (6; 106) umfasst.

13. Dampfgarerzubehör (4; 4'; 104) nach einem der Ansprüche 1 bis 12, **dadurch gekennzeichnet, dass** der Dampfgenerator (5; 105) eine untere ringförmige Auflageoberfläche (9; 109) aufweist.

14. Dampfgarerzubehör (4; 4'; 104) nach einem der Ansprüche 1 bis 13, **dadurch gekennzeichnet, dass** der Dampfgenerator (5; 105) eine untere Wand (13; 113) aufweist, in der der mindestens eine Dampfverteilungsausgang (15; 115) gebildet ist, und dadurch, dass die Dampferzeugungskammer (20; 120) in dem Dampfgenerator (5; 105) auf Abstand zu der unteren Wand (13; 113) angeordnet ist.

15. Dampfgarerzubehör (4; 4'; 104) nach einem der Ansprüche 1 bis 14, **dadurch gekennzeichnet, dass** der Dampfgenerator (5; 105) eine äußere Seitenwand (12; 112) aufweist, und dadurch, dass die Dampferzeugungskammer (20; 120) in dem Dampfgenerator (5; 105) auf Abstand zu der äußeren Seitenwand (12; 112) angeordnet ist.

16. Elektrischer Dampfgarer (1), der einen Behälter (2) zum Enthalten der zu erhitzenden und/ oder zu garenden Lebensmittel und einen Deckel (3) umfasst, der vorgesehen ist, um auf dem Behälter (2) aufzuliegen, wobei der Deckel (3) ein Dampfgarerzubehör (4) zum Dampferhitzen und/ oder -garen von in dem Behälter (2) enthaltenen Lebensmitteln bildet, **dadurch gekennzeichnet, dass** das Dampfgarerzubehör (4) einem der Ansprüche 1 bis 15 entspricht.

## Claims

1. Steamer accessory (4; 4'; 104) for steam-heating and/or -cooking food contained in a container (2), the steamer accessory (4; 4'; 104) comprising a steam generator (5; 105) comprising a steam production chamber (20; 120) connected to at least one steam distribution outlet (15; 115) provided in a lower part (10; 110) of the steam generator (5; 105), the steamer accessory (4; 4'; 104) comprising a ring (80; 80') carrying the steam generator (5; 105), the ring (80; 80') having a lower face (81, 81') and an upper face (82; 82'), the steamer accessory (4; 4'; 104) comprising a water reservoir (6; 106), the water reservoir (6; 106) being carried by the ring (80; 80'), **characterised in that** the ring (80; 80') provides, if desired with the steam generator (5; 105), at least one vent (90; 90') bringing the lower face (81; 81') of the ring (80; 80') into communication with the upper face (82; 82') of the ring (80; 80').

2. Steamer accessory (4; 4'; 104) according to claim 1, **characterised in that** the ring (80; 80') is removable with respect to the steam generator (5; 105).

3. Steamer accessory (4; 4'; 104) according to one of claims 1 or 2, **characterised in that** the ring (80; 80') comprises an annular wall (86; 86') surrounding the steam generator (5; 105).

4. Steamer accessory (4) according to claim 3, **characterised in that** the annular wall (86; 86') is made of glass.

5. Steamer accessory (4; 4'; 104) according to one of claims 3 or 4, **characterised in that** said vent (90) passes through the annular wall (86).

6. Steamer accessory (4) according to one of claims 1 to 5, **characterised in that** said vent (90) is formed by a conduit (87) bringing the lower face (81) of the ring (80) into communication with the upper face (82) of the ring (80).

7. Steamer accessory (4') according to one of claims 1 to 4, **characterised in that** said vent (90') is provided between the ring (80') and the steam generator (5).

8. Steamer accessory (4; 4'; 104) according to one of claims 1 to 7, **characterised in that** the ring (80; 80') comprises an annular seal (85; 85') carrying the steam generator (5; 105).

9. Steamer accessory (4') according to claim 8, **characterised in that** said vent (90') is provided in the annular seal (85').

10. Steamer accessory (4; 4'; 104) according to one of claims 1 to 9, **characterised in that** the water reservoir (6; 106) supplies water to the steam production chamber (20; 120).

11. Steamer accessory (4; 4') according to one of claims 1 to 10, **characterised in that** the water reservoir (6) is removable with respect to the steam generator (5), and **in that** the steam generator (5) carries the removable water reservoir (6).

12. Steamer accessory (4; 4'; 104) according to one of claims 1 to 9, **characterised in that** the steam production chamber (20; 120) comprises the water reservoir (6; 106).

13. Steamer accessory (4; 4'; 104) according to one of claims 1 to 12, **characterised in that** the steam generator (5; 105) has a lower annular bearing surface (9; 109).

14. Steamer accessory (4; 4'; 104) according to one of claims 1 to 13, **characterised in that** the steam generator (5; 105) has a lower wall (13; 113) wherein is formed said at least one steam distribution outlet (15; 115) and **in that** the steam production chamber (20; 120) is arranged in the steam generator (5; 105) at a distance from the lower wall (13; 113).

15. Steamer accessory (4; 4'; 104) according to one of claims 1 to 14, **characterised in that** the steam generator (5; 105) has an outer side wall (12; 112) and **in that** the steam production chamber (20; 120) is arranged in the steam generator (5; 105) at a distance from the outer side wall (12; 112).

16. Electric steamer (1) comprising a container (2) for containing food to be heated and/or cooked and a cover (3) intended to rest on the container (2), wherein the cover (3) forms a steamer accessory (4) to steam-heat and/or -cook the food contained in the container (2), **characterised in that** the steamer accessory (4) is in accordance with one of claims 1 to 15.
